Europäisches Patentamt

European Patent Office

Office européen des brevets

(11) Veröffentlichungsnummer: **0 535 364 A1**

## (12) EUROPÄISCHE PATENTANMELDUNG

(21) Anmeldenummer: **92114473.9**

(22) Anmeldetag: **25.08.92**

(51) Int. Cl.5: **G01P 5/00**

(30) Priorität: **30.09.91 DE 4132589**

(43) Veröffentlichungstag der Anmeldung:
**07.04.93 Patentblatt 93/14**

(84) Benannte Vertragsstaaten:
**AT BE DE DK FR GB IT NL**

(71) Anmelder: **SIEMENS AKTIENGESELLSCHAFT**
**Wittelsbacherplatz 2**
**W-8000 München 2(DE)**

(72) Erfinder: **Von Alexander, Jena, Dr.**
**Oskar-von-Miller-Ring 29**
**W-8000 München 2(DE)**
Erfinder: **Valentin, Magori, Dipl.-Phys.**
**Limburgstrasse 17**
**W-8000 München 90(DE)**

(54) **Verfahren zu hochauflösenden eindeutigen Strömungsgeschwindigkeitsmessung mittels Ultrasschall.**

(57) Ein Verfahren zur hochauflösenden eindeutigen Strömungsgeschwindigkeitsmessung mittels Ultraschall, insbesondere für Gas zähler, bei dem ein Sendesignal mit einer Trägerfrequenz $f_t$ durch die betreffende Meßstrecke in Form eines Meßrohrs gesendet wird und bei dem die von der Strömungsgeschwindigkeit des Mediums, dessen Strömungsgeschwindigkeit zu messen ist, abhängige Phasendifferenz zwischen dem Sende- und einem Empfangssignal nach dem Lambda-Locked-Loop- (LLL-) Verfahren bestimmt wird, wobei die Strömungsgeschwindigkeit aus der Phasendifferenz ermittelt wird.

FIG 1

Die vorliegende Erfindung betrifft Verfahren zur hochauflösenden eindeutigen Strömungsgeschwindigkeitsmessung mittels Ultraschall, insbesondere für Gaszähler.

Eine bereits vorgeschlagene Ultraschall-Durchflußmeßtechnik nach dem Lambda-Locked-Loop-(LLL-) Verfahren für Wärmemengenmesser in Heizanlagen kann an sich grundsätzlich in modifizierter Form auch zur Messung der Geschwindigkeit von Gasströmungen, insbesondere zur Verwirklichung eines Haushalts-Gaszählers, eingesetzt werden. In einem solchen Fall ist es notwendig, daß auch kleine Strömungsgeschwindigkeiten mit hoher Auflösung erfaßt werden. Dies bedeutet, daß auch kleine Änderungen der Geschwindigkeit zu deutlich auswertbaren Änderungen der Phasendifferenz zwischen Ultraschall-Sende- und Empfangssignal führen, was durch eine hohe Anzahl von Wellenlängen auf der Meßstrecke zu erreichen ist. Bei großen Strömungsgeschwindigkeiten führt die zu großen Phasendifferenzen, die z. B. $2\pi$ bei weitem übersteigen und somit den Eindeutigkeitsbereich des Phasendetektors überschreiten.

Die gemessene Phasendifferenz $\phi^*$ entspricht bis auf $2n{*}\pi$ der tatsächlichen Phasendifferenz:

$$\phi^* = \phi + 2n {*} \pi$$

wobei n ganzzahlig positiv, negativ oder Null sein kann.

Damit ist die Eindeutigkeit der Messung nicht mehr gewährbar, weil die Ordnungszahl nicht bekannt ist.

Bisher wurde bei Phasenverfahren die Trägerfrequenz hinreichend niedrig gewählt, damit die Eindeutigkeit der Phasenauswertung gewährleistet bleibt. Bei dem bekannten Lambda-Set-And-Look-Verfahren wird die Mehrdeutigkeit durch eine simultane Auswertung der Flanken eines Bursts hervorgerufen.

Der vorliegenden Erfindung liegt die Aufgabe zugrunde, ein Verfahren der eingangs genannten Art zu schaffen, mittels dessen in zuverlässiger Weise eine hochauflösende Ultraschall-Strömungsgeschwindigkeitsmessung durchgeführt werden kann, ohne daß dabei mehrdeutige Meßergebnisse zustande kommen.

Zur Lösung dieser Aufgabe wird ein Verfahren nach dem Oberbegriff des Patentanspruchs 1 vorgeschlagen, das durch die in diesem Patentanspruch angegebenen Merkmale gekennzeichnet ist.

Vorteilhafte Weiterbildungen der Erfindung sind durch die in den Unteransprüchen angegebenen Merkmale gekennzeichnet.

Im folgenden wird die Erfindung anhand mehrerer Figuren, die bevorzugte Ausführungsbeispiele betreffen, im einzelnen beschrieben.

Fig. 1    zeigt eine schematische Darstellung einer Anordnung zu einer erfindungsgemäßen Strömungsmessung mit trägerseitiger Auswertung und modulationsgeführter Initialisierung eines Meßvorgangs.

Fig. 2    zeigt eine weitere schematische Darstellung einer Anordnung zu einer erfindungsgemäßen Strömungsmessung durch Kombination des bekannten LLL-Verfahrens und des bekannten COHMOD-Prinzips.

Die vorliegende Erfindung beseitigt die Mehrdeutigkeit hochauflösender Phasenverfahren durch folgende Maßnahmen:

a) Ein Sendesignal mit der Trägerfrequenz $f_t$ wird auf die Meßstrecke gegeben, und es wird die von der Strömungsgeschwindigkeit abhängige Phasendifferenz zwischen Sende- und Empfangssignal nach einem der bekannten Auswerteverfahren (Phasendifferenz-Auswertung, LLL-Verfahren) bestimmt.

b) Das Sendesignal wird simultan oder sequentiell mit einer niederfrequenten Modulationsfrequenz $f_m$ moduliert, und das modulierte Sendesignal wird auf die Meßstrecke gegeben. Das empfangene Signal wird demoduliert, und die strömungsgeschwindigkeitproportionale Phasendifferenz zwischen modulierendem Signal und demoduliertem Signal wird nach einem bekannten Auswerteverfahren (Phasendifferen-Auswertung, "COHMOD"-Verfahren) ausgewertet.

c) Die beiden Maßnahmen a) u. b) werden so kombiniert, daß in gewünschter Weise die hohe Auflösung der trägerfrequenten Auswertung durch gleichzeitige oder sequentielle Auswertung der Modulationsfrequenz im Sinne einer Fein/Grob-Ablesung eindeutig bleibt. Zusätzlich kann die Modulationsfrequenz zur Initialisierung und enventuell fortlaufenden Überwachung des Meßbereichs genutzt werden.

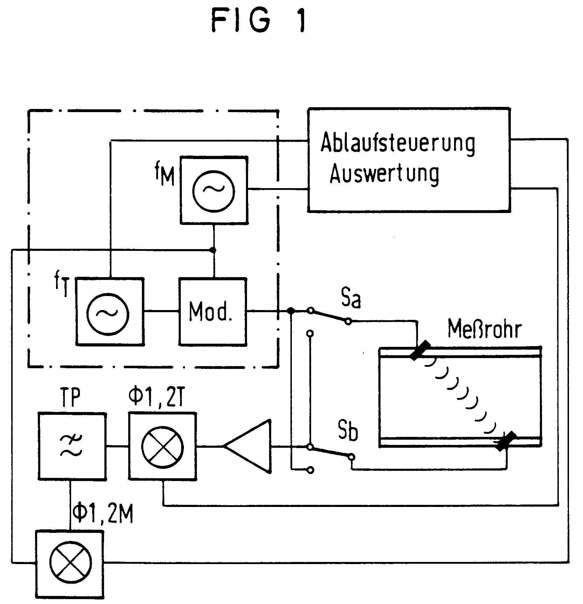

Die Verknüpfung der Aussagen aus a) und b) kann erfindungsgemäß unterschiedlich erfolgen, z. B. durch entsprechende Algorithmen mittels eines Mikroprozessors, vergl. Fig. 1, der auch zusätzlich eine Ablaufsteuerung vornehmen kann.

Hinsichtlich des Modulationsverfahrens - Amplituden- oder Frequenz- bzw. Phasenmodulation - sowie der Form des modulierenden Signals bestehen keine Einschränkungen, abgesehen davon, daß das bekannte Lambda-Set-And-Look-Verfahren einen Spezialfall einer Amplitudenmodulation mit Ein- und Ausschalten des Trägers (100%-ige Rechteckmodulation) darstellt.

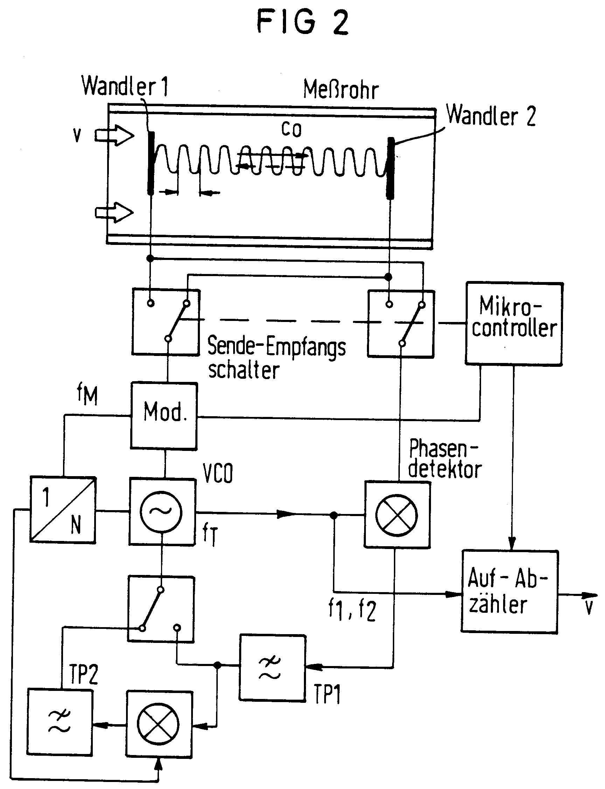

Das modulierende Signal mit der Frequenz $f_m$ kann aus dem Träger (Frequenz $f_t$) durch Frequenzteilung erzeugt werden. Die sich dabei ergebende Kohärenz zwischen Träger und Modulation kann vorteilhaft bei der Kombination des LLL-Verfahrens mit dem "COHMOD"-Verfahren genutzt werden. Durch Einregeln der Phase des Modulationssignals ergibt sich eine grobe Bestimmung des richtigen Wertes für die Trägerfrequenz beim LLL-Verfahren, das durch nachfolgende oder simultan durchgeführte Regelung der Trägerfrequenz zu einem eindeutigen und genauen Wert führt, vergl. Fig. 2. Dabei entspricht das Verhältnis zwischen der Anzahl der Wellenlängen der Trägerfrequenz und den Schwingungen der Modulationsfrequenz dem Teilungsverhältnis bei der Frequenzteilung. Daher kann auch das modulierte Sendesignal als Referenzsignal für den Phasendetektor genutzt werden. Bei richtig eingerasteter Wellenlänge wird das Empfangssignal mit einem Sendesignal verglichen, das um eine oder mehrere Perioden der Modulationsfrequenz versetzt ist.

Bei der Durchführung der erfindungsgemäßen Strömungsmessung kann auf die Benutzung "COHMOD"-Verfahrens auch verzichtet werden, da die Ordnung, auf die das LLL-Verfahren eingerastet ist, aus der Phasendifferenz des modulierenden Signals auch direkt bestimmt werden kann. Somit könnte auch eine LLL-Frequenz (z. B. mit einem $\mu$P) vorausberechnet oder sukzessive eingestellt werden, ohne daß das COHMOD-Verfahren benutzt werden müßte.

## Patentansprüche

1. Verfahren zur hochauflösenden eindeutigen Strömungsgeschwindigkeitsmessung mittels Ultraschall, insbesondere für Gaszähler, **dadurch gekennzeichnet,** daß ein Sendesignal mit einer Trägerfrequenz $f_t$ durch die betreffende Meßstrecke in Form eines Meßrohrs (Figur 1) gesendet wird und daß die von der Strömungsgeschwindigkeit des Mediums, dessen Strömungsgeschwindigkeit zu messen ist, abhängige Phasendifferenz zwischen dem Sende- und einem Empfangssignal nach dem Lamda-Locked-Loop-(LLL-)Verfahren bestimmt wird, wobei die Strömungsgeschwindigkeit aus der Phasendifferenz ermittelt wird und daß die Ordnungszahl n der Wellenlänge $\lambda$ in der gemessenen Phasendifferenz $\phi^* = \phi 2n\lambda$ zusätzlich bestimmt wird.

2. Verfahren nach Anspruch 1, **dadurch gekennzeichnet,** daß zur Bestimmung der Ordnungszahl n ein Sendesignal simultan oder sequentiell mit einer niederfrequenten Modulationsfrequenz $f_m$ moduliert wird und das modulierte Sendesignal durch eine Meßstrecke in Form eines Meßrohres (Figur 2) gesendet wird und daß ein empfangenes Signal demoduliert wird und die strömungsgeschwindigkeitsproportionale Phasendifferenz zwischen modulierendem Signal und demoduliertem Signal mittels eines an sich bekannten Phasendifferenz-Auswerteverfahrens bestimmt wird.

3. Verfahren nach Anspruch 2, **dadurch gekennzeichnet,** daß die Modulationsfrequenz zur Initialisierung und gegebenenfalls zur fortlaufenden Überwachung des Meßbereichs genutzt werden.

# FIG 1

# FIG 2

Wandler 1     Meßrohr     Wandler 2

v

co

Sende-Empfangs
schalter

Mikrocontroller

$f_M$

Mod.

VCO

Phasendetektor

$\frac{1}{N}$

$f_T$

$f1, f2$

Auf - Abzähler

v

TP2

TP1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PROCEEDINGS OF COMP EURO 89, VLSI AND COMPUTER PERIPHERALS, 8.- 12. Mai 1989, HAMBURG, DE Seiten 3-21 - 3-26 V. MAGORI 'SIGNAL PROCESSING FOR SMART ULTRASONIC SENSORS' * Seite 3-25, Spalte 2, Zeile 2 - Seite 3-26, Spalte 1, Zeile 17; Abbildungen 11,12 * | 1 | G01P5/00 |
| A | US-A-3 861 211 (R.N.DEWAN) * Spalte 1, Zeile 39 - Zeile 49 * * Spalte 3, Zeile 1 - Zeile 54; Abbildung 2 * | 2 | |
| A | EP-A-0 218 126 (SIEMENS AG) * Seite 2, Zeile 16 - Zeile 32 * * Seite 4, Zeile 9 - Zeile 22; Abbildung 3 * | 1,2 | |

| | RECHERCHIERTE SACHGEBIETE (Int. Cl.5) |
|---|---|
| | G01P G01F |

Der vorliegende Recherchenbericht wurde für alle Patentansprüche erstellt

| Recherchenort | Abschlußdatum der Recherche | Prüfer |
|---|---|---|
| DEN HAAG | 15 JANUAR 1993 | HANSEN P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes Dokument